# EUROPÄISCHE PATENTSCHRIFT

(11) **EP 2 725 277 B1**
(45) Veröffentlichungstag und Bekanntmachung des Hinweises auf die Patenterteilung: **02.09.2015**
(21) Anmeldenummer: 12190406.4
(22) Anmeldetag: 29.10.2012
(51) Int. Cl.: F16L 55/165, B32B 27/08, B32B 27/34, B32B 1/08

(54) **Rohrinnenbeschichtungsmaterial sowie Verfahren zur Sanierung defekter Abwasserkanäle**
Internal coating material for pipes and method of retrofitting defective waste water channels
Matériau de revêtement interne de tube ainsi que le procédé d'assainissement de canaux d'eaux usées défectueux

(30) Priorität: 26.10.2012 DE 102012110265
(43) Veröffentlichungstag der Anmeldung: 30.04.2014
(73) Patentinhaber: Mondi Consumer Packaging Technologies GmbH, 48599 Gronau (DE)
(72) Erfinder: Bader, Herbert, Dr, 48356 Nordwalde (DE); Ohneiser, Alexander, 48341 Altenberge48341 Altenberge (DE); Niepelt, Ralf, 48599 Gronau (DE)
(74) Vertreter: Lorenz, Bernd Ingo Thaddeus

(56) Entgegenhaltungen:
- EP-A2- 0 342 897
- EP-B1- 0 454 309
- WO-A1-2010/111025

## Beschreibung

Die Erfindung betrifft ein Rohrinnenbeschichtungsmaterial, insbesondere für Sanierung defekter Abwasserkanäle mit einer schlauchförmigen Textil- oder Faserschicht, die mit einem aushärtbaren Harz getränkt ist, und mit einer innerhalb der schlauchförmigen Textil- oder Faserschicht angeordneten Innenfolie, welche eine Schicht auf der Basis von Polyamid als Barriere aufweist.

Abwassersysteme stellen eine üblicherweise über Jahre oder Jahrzehnte gewachsene, inhomogene Infrastruktur dar, welche einer erheblichen Dauerbelastung ausgesetzt ist. Durch Undichtigkeiten des Abwasserkanalsystems können sich sehr starke Umweltbelastungen ergeben, wenn Schmutzwasser aus dem Kanalsystem in das angrenzende Erdreich sickert. Neben einer lokalen Kontamination können durch Auswaschungen auch umliegende Gewässer oder das Grundwasser beeinträchtigt werden. Aufgrund der erheblichen Länge und Verzweigung von Kanalnetzen ist die Instandhaltung sehr aufwendig, weshalb möglichst einfache Verfahren zur Sanierung angestrebt werden. Dies betrifft insbesondere auch den Bereich von einzelnen Hausanschlüssen, wobei aufgrund der dort vorhandenen Rohrdurchmesser ein direkter Zugang nicht möglich ist.

Anstelle einer kompletten Erneuerung von Kanalabschnitten, wozu umfangreiche Erdbaumaßnahmen notwendig sind, sind verschiedene Verfahren zur grabenlosen Sanierung bekannt. Bei einer solchen grabenlosen Sanierung wird ein Rohrinnenbeschichtungsmaterial eingesetzt, welches üblicherweise als Schlauch bereitgestellt wird. Entsprechende Verfahren werden auch als Relining-Verfahren oder Schlauchrelining-Verfahren bezeichnet. Derartige Relining-Verfahren sind in verschiedenen Varianten bekannt.

So beschreiben die DE 1 912 478 A, US 4,368,091, DE 36 90 695 C2, EP 0 875 713 B1 und EP 1 278 981 B1 Verfahren, bei denen ein schlauchförmiges Rohrinnenbeschichtungsmaterial an einem Ende eines Kanalabschnittes befestigt wird, wobei dann durch ein Fluid das schlauchförmige Material in den Kanalabschnitt hineingestülpt wird und wobei gleichzeitig durch das innere des schlauchförmigen Materials ein Klebstoff zur Verbindung des schlauchförmigen Materials mit der Innenwand eingebracht wird. Ein solches auf dem Prinzip des Umstülpens basierendes Verfahren ist insgesamt vergleichsweise aufwendig und nur bei einer begrenzten Länge des Kanalabschnittes gut möglich. Auch die gleichmäßige Einbringung des Klebstoffes stellt eine erhebliche Herausforderung dar.

Neben diesen Umstülpverfahren sind des Weiteren Verfahren bekannt, bei denen das Rohrinnenbeschichtungsmaterial zunächst in einen Kanalabschnitt eingezogen und nachfolgend durch ein Fluid in radialer Richtung expandiert und gegen die Innenwand des Kanalrohrabschnitts gedrückt wird. Das Rohrinnenbeschichtungsmaterial weist eine schlauchförmige Textil- oder Faserschicht auf, die mit einem aushärtbarem Harz getränkt ist. Nach dem Aufrichten und Expandieren des Rohrinnenbeschichtungsmaterials wird dann das Harz durch geeignete Mittel ausgehärtet, um das Rohrinnenbeschichtungsmaterial in der gewünschten Position zu fixieren. Dabei besteht häufig das Problem, dass das aushärtbare Harz Styrol enthält, welches während der Lagerung des Rohrinnenbeschichtungsmaterials sowie während dem Aushärten des Harzes nicht an die Umgebung abgegeben werden soll.

Ein Rohrinnenbeschichtungsmaterial mit den eingangs beschriebenen Merkmalen sowie ein Verfahren zur Sanierung defekter Abwasserkanäle sind aus der EP 1 125 082 B1 bekannt. Die Innenfolie kann eine Schicht aus Polyamid als Barriere sowie eine radial innenliegend daran angrenzende Schutzschicht aus Polyurethan, Polyester, einem Polyolefin oder einem thermoplastischen Styrol-Copolymer aufweisen.

Eine Barriereschicht aus Polyamid bei einem ähnlichen Rohrinnenbeschichtungsmaterial ist auch aus der EP 0 267 742 A2 bekannt, wobei die dort beschriebene Innenfolie mit mehreren Lagen durch Coextrusion hergestellt sein kann.

Gemäß der WO 2010/111025 A1 wird eine dreischichtig coextrudierte Innenfolie vorgeschlagen, die Lagen aus unterschiedlichen Polyurethanen aufweist.

Wenn das Aushärten des Harzes durch UV-Licht aktiviert werden soll, besteht auch das Bedürfnis, dass die mit dem aushärtbarem Harz getränkte Textil- oder Faserschicht zunächst durch eine UV-dichte Außenfolie geschützt ist, während die Innenfolie zur Aktivierung des Aushärteprozesses UV-durchlässig sein muss. Geeignete Folien werden in der WO 2010/075946 A1 beschrieben.

Wenn das Rohrinnenbeschichtungsmaterial, wie zuvor erläutert, in einen Kanalrohrabschnitt eingebracht, aufgerichtet und fixiert wird, kann die Innenfolie entweder innerhalb des Rohres verbleiben oder nach dem Aushärten herausgezogen werden. Die vorliegende Erfindung bezieht sich insbesondere auf eine Ausgestaltung des Verfahrens, bei der die Innenfolie nachfolgend entfernt wird. Eine solche Verfahrensweise ist in der EP 0 454 309 B1 beschrieben.

Aus der EP 0 342 897 A2 ist eine Kunststofffolie bekannt, welche zusammen mit einer mit Harz getränkten Textil- oder Faserschicht als Rohrinnenbeschichtungsmaterial eingesetzt werden kann. Die Folie weist einen asymmetrischen Schichtaufbau mit einer Außenschicht aus Polyamid und einer heißsiegelbaren Kunststoffschicht auf.

Vor dem Hintergrund der bekannten Rohrinnenbeschichtungsmaterialien liegt der Erfindung die Aufgabe zugrunde, eine verbesserte Ausgestaltung anzugeben, welche sich durch eine besonders einfache und zuverlässige Handhabung auszeichnet.

Gegenstand der Erfindung und Lösung der Aufgabe ist ein Rohrinnenbeschichtungsmaterial gemäß Patentanspruch 1. Ausgehend von den eingangs beschriebenen Merkmalen ist das Rohrinnenbeschichtungsmaterial erfindungsgemäß dadurch gekennzeichnet, dass die Innenfolie bei einem zumindest dreischichtigen Aufbau zwischen zwei Außenschichten auf der Basis von Polyamid zumindest eine Kernschicht aus einem thermoplastischen Elastomer oder ein lonomer aufweist. Die Kernschicht aus thermoplastischem Elastomer bzw. lonomer verleiht der gesamten Innenfolie eine erhöhte Durchstoß- und Weiterreißfestigkeit, die eine zuverlässigere Handhabung der Innenfolie auch bei niedrigen Temperaturen ermöglicht. Gleichzeitig ist die Kernschicht aber an beiden Seiten durch Außenschichten auf der Basis von Polyamid geschützt.

Die Außenschichten auf der Basis von Polyamid verleihen der gesamten Innenfolie eine erhöhte Temperaturbeständigkeit, wodurch insbesondere eine Beschädigung der Folie bei dem Aushärtevorgang des Harzes vermieden wird. Hohe Temperaturen können sowohl aus der Reaktionswärme des aktivierten Harzes als auch aus einem Wärmeeintrag zur Aktivierung resultieren.

Durch die zwei in einem Abstand zueinander angeordneten Außenschichten aus Polyamid wird insgesamt auch die Barrierewirkung gegenüber Styrol, welches üblicherweise in dem aushärtbaren Harz als reaktive Substanz enthalten ist, verbessert. Gerade durch die komplementären Eigenschaften von Polyamid einerseits und dem thermoplastischen Elastomer bzw. lonomer andererseits werden verbesserte mechanische Eigenschaften erzielt, wobei durch die Anordnung einer weichen, elastischen Schicht zwischen zwei harten Außenschichten ein gewisser Sperrholzeffekt erzielt wird.

Da an beiden Außenschichten Polyamid vorliegt, kann die Innenfolie auch leicht zu einem geschlossenen Schlauch geformt werden, wobei eine der Außenschichten beispielsweise unter Bildung einer so genannten Flossennaht mit sich selbst verklebt oder versiegelt werden kann. Die so gebildete, zunächst nach außen stehende Flossennaht wird üblicherweise umgelegt und im umgelegten Zustand festgeklebt. Insbesondere ist aber auch eine Überlappung der zu einem Schlauch geformten Innenfolie möglich, wobei dann die beiden aus Polyamid gebildeten Außenschichten miteinander verbunden werden. Bei der Bildung des geschlossenen Schlauches durch eine Überlappungsnaht ergibt sich der Vorteil, dass diese eine sehr hohe Festigkeit aufweist und auch bei einer Expansion ohne weiteres Scherkräften zwischen den miteinander verschweißten Außenschichten widerstehen kann. Es ergibt sich gegenüber der Flossennaht auch der Vorteil, dass nicht drei sondern lediglich zwei Lagen der Innenfolie übereinanderliegen. Im Vergleich zu einer Flossennaht können auch unerwünschte Hohlräume vermieden werden.

Während gemäß dem Stand der Technik die Innenfolie üblicherweise als nahtfreier, geschlossener Schlauch im Blasfolienverfahren gefertigt wird, kann im Rahmen der Erfindung eine zunächst flächige Innenfolie bereitgestellt und durch Verschweißen zu einem Schlauch geformt werden. Während bei der Herstellung eines nahtfreien Schlauches der Schlauchdurchmesser bei der Blasfolienextrusion bekannt sein und kontrolliert werden muss, ergibt sich durch den Einsatz einer Flachfolie eine erhebliche Erleichterung. Zunächst ist bei der Blasfolienextrusion das Aufblasverhältnis aufgrund der Orientierung der Makromoleküle nicht frei wählbar. Bei einer Flachfolie kann jedoch gegebenenfalls ein Beschnitt in Kauf genommen werden, um durch das Verschweißen der Innenfolie mit sich selbst einen Schlauch mit genau vorgegebenem Durchmesser zu erhalten. Darüber hinaus besteht auch die Möglichkeit, aus einer Flachfolie mehrere zu einem Schlauch geschlossene Innenfolien bereitzustellen, wobei die Flachfolie entsprechend in mehrere Streifen geschnitten wird.

Als Verbindungsverfahren können alle gängigen Siegel- oder Schweißtechniken eingesetzt werden. Dazu zählen Wärmekontaktschweißen, Impulsschweißen, Ultraschallschweißen, Hochfrequenzschweißen und Laserschweißen. Möglich ist es aber auch die Innenfolie zu einem Schlauch zu verkleben, wozu beispielsweise ein Hotmelt-Klebstoff, ein PUR-Klebstoff sowie ein Ein- oder Zwei-Komponentenkleber auf Epoxidbasis eingesetzt werden kann. Aufgrund der einfachen Verfahrensführung und geringer Investitionskosten ist ein Wärmekontaktschweißen bevorzugt.

Die Außenschichten weisen üblicherweise eine Dicke zwischen 10 µm und 100 µm, vorzugsweise eine Dicke zwischen 20 µm und 80 µm auf, wobei die beiden Außenschichten auch eine unterschiedliche Dicke aufweisen können. Für die Außenschichten der Innenfolie ist insbesondere ein Copolyamid, insbesondere ein Copolyamid PA6/66 geeignet. Die Außenschichten können vollständig aus Polyamid einschließlich Copolyamid gebildet sein oder zumindest Polyamid als Hauptbestandteil aufweisen. Übliche Beimischungen und Blends mit anderen Polymeren sind jedoch nicht ausgeschlossen.

Polyamid zeichnet sich durch eine relativ hohe Schmelztemperatur aus, die üblicherweise oberhalb von 170 °C liegt. Bezüglich der Bestimmung der Schmelztemperatur T_{M} wird auf die Norm ISO 11357-3 verwiesen.

Die Kernschicht weist typischerweise eine Dicke zwischen 10 µm und 200 µm, vorzugsweise zwischen 20 und 80 µm auf. Geeignet sind insbesondere lonomere oder thermoplastische Elastomere aus der Gruppe der elastischen Polyolefine und der elastischen Polyurethane. Die genannten Materialien können auch in einer Mischung mit anderen Polymeren vorliegen, um die weiteren Eigenschaften wie beispielsweise die Wasserdampfpermeation steuern zu können.

lonomere sind thermoplastische Copolymere aus Ethylen und Acrylsäure, bei denen Natrium- oder Zink-lonen die Carboxyl-Gruppen neutralisieren und so lonenbindungen zwischen den Molekülen ausbilden. Im Gegensatz zu herkömmlichen Kunststoffen wirken bei lonomeren zusätzlich zu den Nebenvalenzkräften ionische Bindungskräfte, d. h. elektrostatische Kräfte zwischen den Molekülketten. Ähnlich wie bei den genannten Elastomeren ergibt sich auch bei lonomeren eine hohe Durchstoß- und Weiterreißfestigkeit. Außerdem besitzen lonomere wie auch elastische Polyolefine eine gute Barrierewirkung gegenüber Wasserdampf. Dies ist gerade dann von Vorteil, wenn das Rohrinnenbeschichtungsmaterial für eine Expansion durch Wasserdampf vorgesehen ist, weil dann die mit Harz getränkte Textil- oder Faserschicht gegen Wasserdampf bzw. Feuchtigkeit geschützt ist. Die alternativ geeigneten elastischen Polyurethane weisen dagegen nur eine niedrige Barrierewirkung gegenüber Wasserdampf auf und werden deshalb bevorzugt dann eingesetzt, wenn eine anderweitige Expansion, beispielsweise durch Druckluft, erfolgt.

Wie bereits zuvor erläutert, kann eine flache Folie als Innenfolie, aus der nachträglich ein geschlossener Schlauch geformt wird, auf unterschiedliche Weise hergestellt werden. Grundsätzlich kann eine flache Folie auch dadurch erzeugt werden, dass ein Blasfolienschlauch gebildet und unmittelbar zusammengelegt wird, wobei eine klebende oder noch nicht völlig ausgehärtete Innenschicht des Blasfolienschlauches mit sich selbst verblockt. So kann beispielsweise aus einer verblockten dreischichtigen Folie mit einer Dicke von 150 µm eine fünfschichtige Folie doppelter Dicke erzeugt werden. So ist es mit einfachen Mitteln möglich, auch durch einen Blasfolienprozess eine Folie mit einer Dicke von beispielsweise 300 µm zu fertigen.

Durch den Einsatz eines lonomers oder eines thermoplastischen Elastomers kann auch die Elastizität bzw. Dehnbarkeit der gesamten Innenfolie gegenüber bekannten Ausführungen erheblich verbessert werden. Dies bringt den Vorteil mit sich, dass das gesamte Rohrinnenbeschichtungsmaterial auch mit einem größeren Expansionsverhältnis eingesetzt werden kann. Für verschiedene Enddurchmesser des expandierten Rohrinnenbeschichtungsmaterials müssen damit weniger unterschiedliche Durchmesser des noch nicht expandierten Rohrinnenbeschichtungsmaterials bereitgestellt werden. Da weniger Durchmesservarianten bereitgestellt werden müssen, reduzieren sich die Herstellungs-, Lager-, und Logistikkosten, wenn standardmäßig Rohrinnenbeschichtungsmaterialien für unterschiedlich Durchmesser von beispielsweise 100 mm bis 2000 mm bereitgestellt werden sollen.

Die Kernschicht ist vorzugsweise auch bei niedrigen Temperaturen flexibel, wobei die Glastemperatur Tg der Kernschicht dazu zweckmäßigerweise unterhalb von -20 °C, vorzugsweise bei etwa -50 °C liegt. Auch wenn die Außenschichten aus Polyamid bei niedrigen Temperaturen vergleichsweise starr sind, verleiht die Kernschicht aus dem thermoplastischen Elastomer der gesamten Innenfolie auch bei niedrigen Außentemperaturen gute mechanische Eigenschaften.

Dabei ist zu berücksichtigen, dass bei dem Einziehen des Rohrinnenbeschichtungsmaterials in einen Kanalrohrabschnitt die Temperatur des Kanalrohrabschnittes durch die Umgebungstemperatur festgelegt ist. Durch die Kernschicht mit einer hohen Kälteflexibilität kann auch bei niedrigen Außentemperaturen ein Reißen oder Platzen der Innenfolie bei der Installation ausgeschlossen werden. Es ergibt sich der Vorteil, dass die Umgebungstemperatur gemäß der vorliegenden Erfindung weitgehend unbeachtlich ist, so dass das erfindungsgemäße Rohrinnenbeschichtungsmaterial unter allen Umständen und insbesondere auch bei etwaigen Notfällen uneingeschränkt eingesetzt werden kann.

Die Innenfolie kann einen symmetrischen Schichtaufbau aufweisen, so dass bei der Anordnung der Innenfolie innerhalb der schlauchförmigen Textil- oder Faserschicht keine sorgfältige Ausrichtung oder Überprüfung erfolgen muss. Eine fehlerhafte Anwendung der Innenfolie wird dadurch ausgeschlossen.

Erfindungsgemäß weist die Innenfolie einen zumindest dreischichtigen Aufbau auf. Davon ausgehend können aber auch weitere Zwischenschichten, beispielsweise zur Verbesserung der Haftvermittlung, eingebracht werden. Wenn beispielsweise zwischen der Kernschicht und den beiden Außenschichten jeweils eine Haftvermittlerschicht angeordnet werden soll, ergibt sich insgesamt ein fünfschichtiger Aufbau, der insbesondere durch Coextrusion gebildet werden kann. Andere Verfahren zur Herstellung der Innenfolie wie eine Kaschierung sollen aber im Rahmen der Erfindung nicht ausgeschlossen werden.

Das Rohrinnenbeschichtungsmaterial weist zusätzlich zu der Innenfolie vorzugsweise auch eine Außenfolie auf, die um die schlauchförmige Textil- oder Faserschicht angeordnet ist. Die Außenfolie schützt die Textil- oder Faserschicht bei dem Einführen in einen Kanalabschnitt. Sofern das Harz, mit dem die Textil- oder Faserschicht getränkt ist, durch UV-Licht aushärtbar ist, muss zunächst auch während der Lagerung des vorbereiteten Rohrinnenbeschichtungsmaterials ein UV-Schutz gewährleistet sein. Ein solcher UV-Schutz kann entweder in die Außenfolie integriert sein oder von einer separaten, außenliegenden Folie bereitgestellt werden. Die Innenfolie muss im Rahmen einer solchen Ausgestaltung jedoch durchlässig für UV-Licht sein, um die Aktivierung des Harzes zu ermöglichen. Die im Rahmen der Erfindung bevorzugten Materialien zeichnen sich durch hohe Transmissionswerte im UV-Bereich aus.

Neben der Aushärtung durch UV-Licht kann eine Aktivierung des aushärtbaren Harzes auch durch Wärme erreicht werden, die beispielsweise in Form von Wasserdampf oder Heißwasser zugeführt wird.

In allen Fällen ergibt sich der Vorteil, dass durch die Anordnung von Polyamid in beiden Außenschichten der Innenfolie eine erhöhte Wärmebeständigkeit erreicht wird.

Gemäß einem weiteren Aspekt der vorliegenden Erfindung soll die Innenfolie nach dem Aushärten des Harzes von der Textil- oder Faserschicht trennbar sein, um diese nach dem Aushärten entfernen zu können. Die Innenfolie wird dabei an einem Ende des Kanalabschnittes gelöst und durch den Kanalabschnitt hindurch abgezogen. Durch die erfindungsgemäße Ausgestaltung mit Polyamid an beiden Außenseiten der Innenfolie können ausreichende Release-Eigenschaften gegenüber der Textil- oder Faserschicht eingestellt werden. Auch bei einem nachträglichen Abtrennen der Innenfolie ergibt sich der Vorteil, dass diese durch den erfindungsgemäßen Schichtaufbau besonders beweglich aber auch stabil ist. Die Gefahr eines Zerreißens der Innenfolie während des Abziehens kann dadurch erheblich reduziert werden.

Bei der schlauchförmigen Textil- oder Faserschicht kann es sich insbesondere um ein Gelege oder Gewebe handeln. Darüber hinaus sind aber auch Faserschichten, beispielsweise aus einem Nonwoven geeignet. Schließlich können auch mehrere gleichartige oder unterschiedliche Schichten miteinander kombiniert werden, um eine ausreichende Stärke der Textil- oder Faserschicht sowie gewünschte mechanische Eigenschaften einstellen zu können. Bevorzugt ist die Textil- oder Faserschicht aus Glasfasern gebildet, wobei aber auch natürliche Fasern, Kunststofffasern, Kohlefasern oder Fasergemische eingesetzt werden können.

Gegenstand der Erfindung ist auch ein Verfahren zur Sanierung defekter Abwasserkanäle, wobei das zuvor beschriebene Rohrinnenbeschichtungsmaterial in einen Kanalrohrabschnitt eingebracht wird, wobei das Rohrinnenbeschichtungsmaterial nachfolgend durch die Beaufschlagung mit einem Fluid in radialer Richtung expandiert und gegen eine Innenwand des Kanalrohrabschnitts gedrückt wird, wobei nach der Expansion das Harz, mit dem die schlauchförmigen Textil- oder Faserschicht getränkt ist, ausgehärtet wird und wobei die Innenfolie nach dem Aushärten des Harzes von der Faserschicht entfernt wird.

Das Rohrinnenbeschichtungsmaterial wird als Strang in den Kanalrohrabschnitt eingeführt, der zunächst nicht den gesamten Querschnitt ausfüllt. Das Rohrinnenbeschichtungsmaterial kann als eingefalteter Schlauch vorgesehen sein. Des Weiteren kann vorgesehen sein, dass der Schlauch im aufgestellten, d. h. im Wesentlichen zylinderförmigen Zustand, einen Außendurchmesser aufweist, der kleiner als der Innendurchmesser des Kanalrohrabschnittes ist. Das Rohrinnenbeschichtungsmaterial wird dann stets in einem gewissen Maße gedehnt, bevor es sich vollständig an die Innenwand des Kanalrohrabschnittes anlegt. Durch diese Maßnahme kann erreicht werden, dass das Rohrinnenbeschichtungsmaterial durch die Beaufschlagung mit dem Fluid gleichmäßig und insbesondere faltenfrei angeordnet wird. Auch im Hinblick auf eine solche Ausdehnung des Rohrinnenbeschichtungsmaterials ist die beschriebene Komposition der Innenfolie besonders vorteilhaft.

Um das Rohrinnenbeschichtungsmaterial durch das Fluid expandieren zu können, ist ein Druckaufbau notwendig. Dazu kann vorgesehen sein, dass das Rohrinnenbeschichtungsmaterial nach dem Einziehen in den Kanalabschnitt an beiden Seiten verschlossen und dann mit dem Fluid beaufschlagt wird. Darüber hinaus ist es aber auch denkbar, dass an einer Seite des Rohrinnenbeschichtungsmaterials die Innenfolie über die schlauchförmige Textil- oder Faserschicht vorsteht und dort verschlossen ist.

Die Erfindung wird im Folgenden anhand einer lediglich ein Ausführungsbeispiel darstellenden Zeichnung erläutert. Es zeigen:
- Fig. 1: ein Rohrinnenbeschichtungsmaterial im Querschnitt,
- Fig. 2: eine Detailansicht einer Innenfolie des Rohrinnenbeschichtungsmaterials in einem Schnitt,
- Fig. 3: einen Querschnitt durch einen Kanalabschnitt, in dem das Rohrinnenbeschichtungsmaterial eingezogen ist,
- Fig. 4: die Anordnung gemäß der Fig. 3 nach Abschluss der Sanierung.

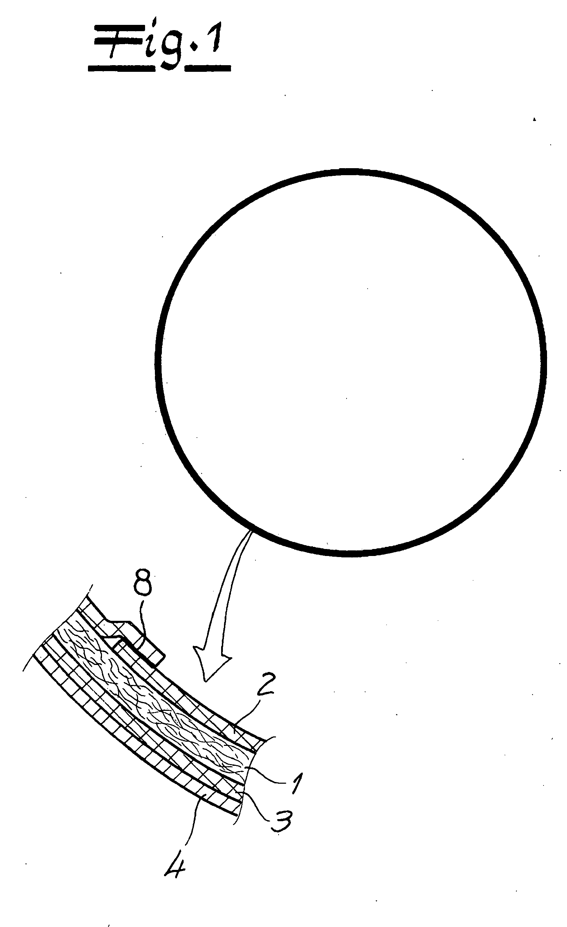

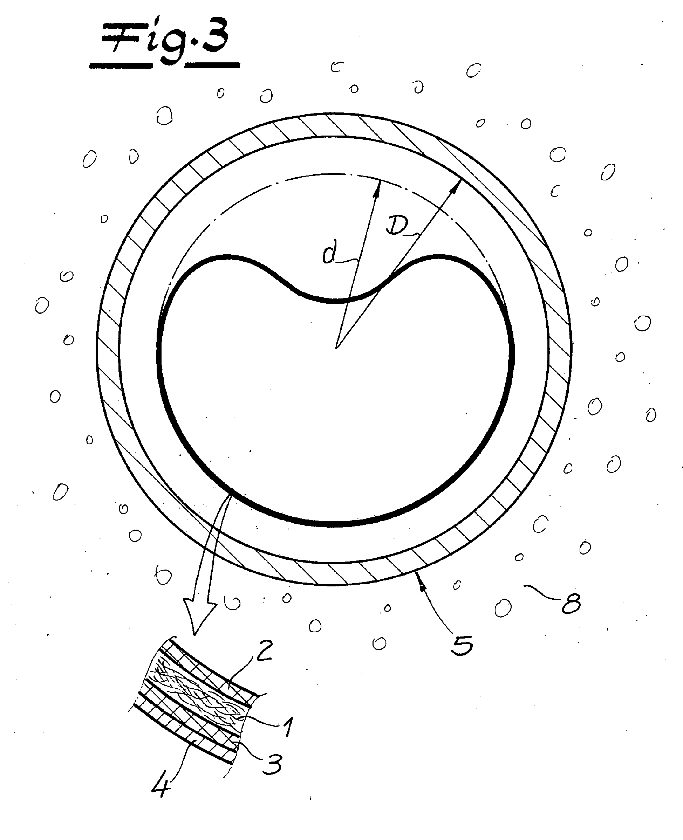

Die Fig. 1 zeigt ein Rohrinnenbeschichtungsmaterial mit einer schlauchförmigen Textil- oder Faserschicht 1, die mit einem aushärtbaren Harz getränkt ist, und mit einer innerhalb der schlauchförmigen Textil- oder Faserschicht 1 angeordneten Innenfolie 2. Vor dem Aushärten des Harzes ist das Rohrinnenbeschichtungsmaterial flexibel. Das aushärtbare Harz enthält Styrol als reaktive Substanz, weshalb die Innenfolie 2 sowie eine um die Textil- oder Faserschicht 1 angeordnete Außenfolie 3 eine Barrierewirkung gegen Styrol aufweisen. Schließlich ist an der Außenseite des Materials noch eine zusätzliche Schutzfolie 4 vorgesehen, welche das Rohrinnenbeschichtungsmaterial vor UV-Strahlen und Beschädigungen beim Einzug in einen Kanalabschnitt 5 (siehe nachfolgend zu Fig. 3) schützt.

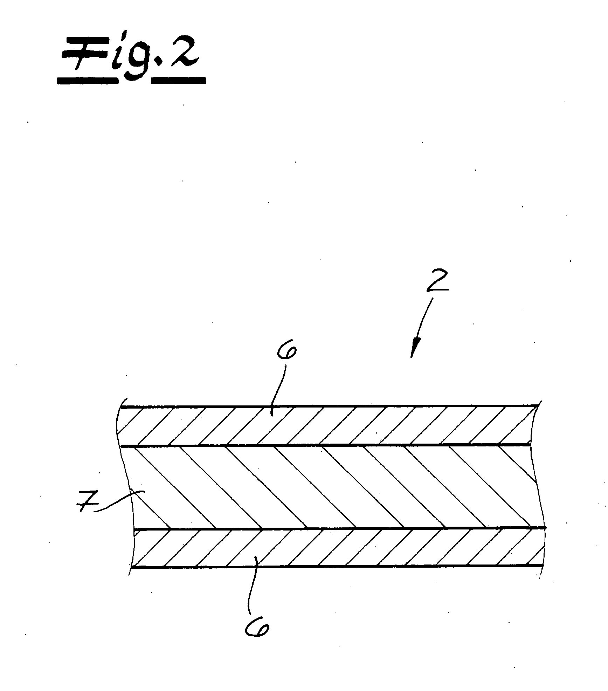

Die Fig. 2 zeigt den Schichtaufbau der Innenfolie 2 gemäß einer erfindungsgemäßen Ausgestaltung. Die Innenfolie 2 weist einen dreischichtigen Aufbau mit zwei Außenschichten 6 auf der Basis von Polyamid und einer Kernschicht 7 aus thermoplastischem Elastomer auf. Gemäß dem Ausführungsbeispiel ist ein Poylamid-Copolymer PA6/66 vorgesehen, welches einen Schmelzpunkt oberhalb von 180 °C aufweist. Die Kernschicht 7 besteht dagegen aus einem thermoplastischen Elastomer aus der Gruppe der elastischen Polyolefine und der elastischen Polyurethane, wobei diese Materialien aber auch miteinander gemischt oder mit anderen Kunststoffen als Zugabe versehen sein können.

Da beide Außenschichten 6 auf der Basis von Polyamid gebildet sind und durch Heißsiegeln miteinander verbunden werden können, kann die rohrförmig angeordnete Innenfolie 2 auch aus einer Flachfolie gebildet werden, deren Ränder sich überlappen. Die Fig. 1 zeigt entsprechend eine durch Verschweißen gebildete Überlappungsnaht 8, an der die im Überlappungsbereich aufeinanderliegenden Außenschichten 6 der Innenfolie 2 miteinander verschweißt sind.

Das thermoplastische Elastomer weist eine niedrige Glastemperatur Tg von weniger als -20 °C und vorzugsweise weniger als -50 °C auf. Auch bei niedrigen Temperaturen bleibt die mehrschichtige Innenfolie 2, die vorzugsweise durch Coextrusiön gebildet ist, somit beweglich und belastbar. Das Rohrinnenbeschichtungsmaterial kann auch bei niedrigen Temperaturen verarbeitet werden, ohne dass die Innenfolie aufplatzt oder einreißt.

Die Innenfolie 2 zeichnet sich durch den erfindungsgemäßen Aufbau grundsätzlich durch hervorragende mechanische Eigenschaften aus, wobei die beiden Deckschichten aus dem Copolyamid PA6/66 eine Barriere für das in dem Harz der Textil- oder Faserschicht 1 enthaltene Styrol darstellen.

Auch die Außenfolie 3 ist üblicherweise mit Barriereeigenschaften hinsichtlich Styrol ausgerüstet und verfügt vorzugsweise auch über einer hohe Kälteflexibilität. Grundsätzlich ist es denkbar, die Außenfolie 3 aus dem gleichen Material wie die Innenfolie 2 zu fertigen. Dies ist insbesondere dann möglich, wenn eine zusätzliche Schutzfolie 4 vorgesehen ist. Darüber hinaus können aber die Eigenschaften der Schutzfolie 4, wie beispielsweise ein UV-Schutz, durch einen geeigneten Schichtaufbau auch in die Außenfolie 3 integriert werden.

Gemäß dem beschriebenen Ausführungsbeispiel ist das Harz durch UV-Licht aushärtbar, weshalb der UV-Lichtschutz mittels der Schutzfolie 4 zwingend erforderlich ist. Darüber hinaus sind aber auch Ausgestaltungen möglich, bei denen das Aushärten des Harzes durch einen Wärmeeintrag ausgelöst wird.

Die Innenfolie 2 ist bei einem durch UV-Licht aushärtenden Harz durch die Reaktionswärme und ansonsten auch durch einen zusätzlichen Wärmeeintrag zur Aktivierung des Aushärtevorgangs erheblichen thermischen Belastungen ausgesetzt. Hier ergibt sich im Rahmen der Erfindung der Vorteil, dass die beiden Außenschichten 6 der Innenfolie 2 eine hohe Wärmewiderstandsfähigkeit aufweisen, wobei während des Aushärtens sogar ein teilweises oder vollständiges Aufschmelzen der Kernschicht 7 in Kauf genommen werden kann, solange die Außenschichten 6 der Innenfolie 2 geschlossen bleiben. Durch die Verwendung von Polyamid in beiden Außenschichten 6 der Innenfolie 2 kann diese leicht zu einem geschlossenen Schlauch geformt werden. Insbesondere ist ein Heißsiegeln beider Außenschichten 6 untereinander oder jeweils mit sich selbst möglich.

Im Rahmen der Erfindung kann die Innenfolie 2 einen symmetrischen Schichtaufbau aufweisen. Die Erfindung ist dabei nicht auf eine dreischichtige Ausgestaltung gemäß der Fig. 2 beschränkt. Insbesondere können zwischen den Außenschichten 6 und der Kernschicht 7 der Innenfolie 2 auch noch Haftvermittlerschichten oder weitere Funktionsschichten angeordnet werden.

Je nach Anwendungsfall liegt die Gesamtdicke der Innenfolie vorzugsweise in einem Bereich zwischen 40 und 240 µm. Die Dicke der beiden Außenschichten liegt vorzugsweise zwischen 10 und 80 µm, während die Kernschicht vorzugsweise eine Dicke im Bereich zwischen 20 und 80 µm aufweist.

Die Fig. 3 zeigt einen Querschnitt durch einen zu sanierenden Kanalabschnitt 5, wobei das Rohrinnenbeschichtungsmaterial gemäß der Fig. 1 zunächst im eingefalteten Zustand in den Kanalabschnitt 5 eingeführt wird. In der Fig. 3 ist des Weiteren angedeutet, dass der von dem Rohrinnenbeschichtungsmaterial gebildete Strang auch im aufgestellten Zustand einen Außendurchmesser d aufweist, der geringer ist als der Innendurchmesser D des Kanalabschnitts 5.

Nachdem das Rohrinnenbeschichtungsmaterial über die gewünschte Länge in den Kanalabschnitt 5 eingeführt ist, wird dieses durch die Beaufschlagung mit einem Fluid aufgestellt und sodann in radialer Richtung expandiert und gegen eine Innenwand des Kanalrohrabschnittes 5 gedrückt. Wenn als Fluid für die Expansion Wasserdampf vorgesehen ist, wird die Kernschicht 7 der Innenfolie 2 vorzugsweise von einem lonomer oder einem elastischen Polyolefin gebildet, weil diese Materialien eine gute Barrierewirkung gegenüber Wasserdampf aufweisen.

Nach der Expansion wird das Harz, mit dem die schlauchförmige Textil- oder Faserschicht 1 getränkt ist, ausgehärtet, wozu je nach Ausgestaltung des Harzes beispielsweise UV-Licht oder auch ein Wärmeeintrag vorgesehen sein können.

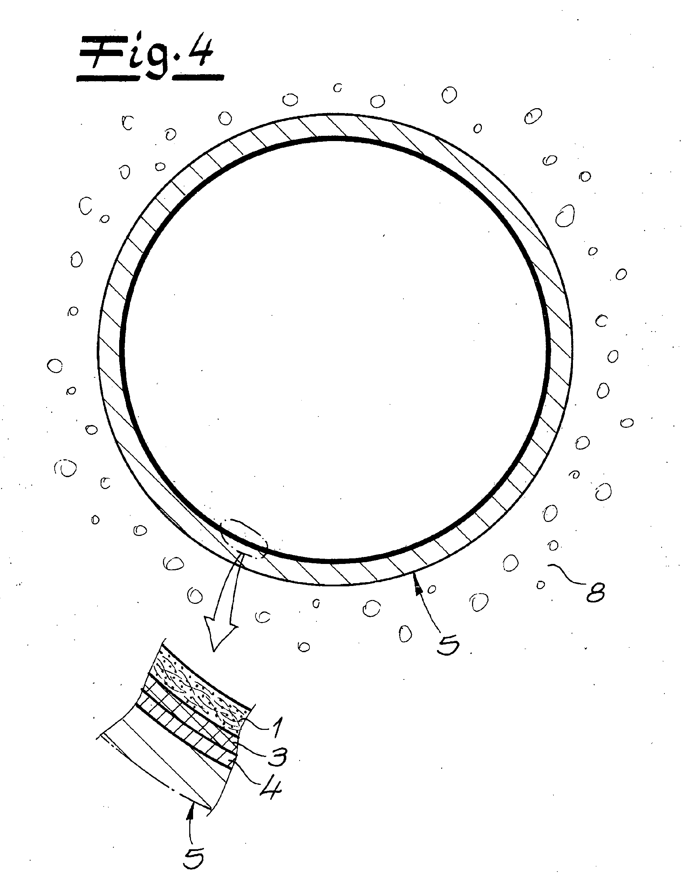

Schließlich wird die Innenfolie 2 nach dem Aushärten des Harzes von der Textil- oder Faserschicht 1 entfernt, so dass sich die Anordnung gemäß der Fig. 4 ergibt. Die Fig. 4 zeigt einen sanierten Kanalabschnitt 5, bei dem undichte Stellen durch das erfindungsgemäße Rohrinnenbeschichtungsmaterial abgedeckt sind, wodurch ein Austritt von Schmutzwasser in das den Kanalabschnitt 5 umgebende Erdreich 8 verhindert werden kann.

Zur Überprüfung der verbesserten Eigenschaften des Rohrinnenbeschichtungsmaterials wurden im Rahmen orientierender Versuche zwei erfindungsgemäße Innenfolien 2 mit einer Gesamtdicke von jeweils 120 µm gefertigt und mit einer zweischichtigen Folie V gemäß dem Stand der Technik verglichen. Die erfindungsgemäßen Folien E1 und E2 weisen einen symmetrischen Schichtaufbau mit Außenschichten 6 auf, die jeweils aus Copolyamid PA6/66 mit einer Dicke von 30 µm gebildet sind. Die Kernschicht 7 der Folie E1 ist aus elastischem Polyurethan mit einer Dicke von 60 µm gebildet, während die Kernschicht 7 gleicher Dicke der Folie E2 aus einem Zn-lonomer (Zinklonomer) als thermoplastischem Kunststoff gebildet ist.

Die erfindungsgemäßen Folien E1 und E2 werden in der Tabelle mit einer lediglich zweischichtigen Folie aus Polyethylen (PE) und Polyamid (PA) verglichen, die ebenfalls eine Gesamtdicke von 120 µm aufweist.

Die Zugfestigkeit der Folien ist nach DIN ISO 527-1 mit einem Prüfkörper Typ 2 bestimmt, wobei die Zugfestigkeit sowohl in Herstellungsrichtung der Folien (MD) als auch in Querrichtung (CD) angegeben ist. Die Durchstoßfestigkeit wurde nach DIN EN 14477 für eine Temperatur von 23°C sowie eine Temperatur von -4°C bestimmt. Schließlich erfolgte auch eine Bestimmung der Wasserdampfdurchlässigkeit gemäß ASTM F 1249. Die Bestimmung der Wasserdampfdurchlässigkeit erfolgte bei einer Temperatur von 38°C und einer relativen Feuchtigkeit von 90 %.

Die beiden erfindungsgemäßen Folien E1 und E2 weisen gegenüber dem Vergleichsbeispiel eine deutlich verbesserte Zugfestigkeit und eine verbesserte Durchstoßfestigkeit auf. Bei einer Kernschicht aus Zn-lonomer (Folie E2) ergibt sich insgesamt eine gute Barrierewirkung gegenüber Wasserdampf, so dass diese Folie auch ohne Weiteres für eine Expansion des Rohrinnenbeschichtungsmaterials durch Wasserdampf geeignet ist Die Barrierewirkung der Folie E1 gegenüber Wasserdampf ist dagegen gering, weshalb diese Folie insbesondere für eine andere Art der Expansion, beispielsweise durch Heißluft, geeignet ist.

| **Folientype** | **Zugfestigkeit** | | **Durchstoßfestigkeit** | | **Wasserdampfdurchlässigkeit** |
|---|---|---|---|---|---|
| | MD | CD | T=23°C | T=-4°C | T=38°C/RH=90% |
| | [N/mm²] | [N/mm²] | [N] | [N] | [g/d/m²] |
| **E1** | 76 | 77 | 15 | 18 | 65 |
| **E2** | 73 | 60 | 12 | 13 | 6 |
| **V** | 44 | 40 | 6 | 7 | 4 |

## Patentansprüche

1. Rohrinnenbeschichtungsmaterial, insbesondere für die Sanierung defekter Abwasserkanäle, mit einer schlauchförmigen Textil- oder Faserschicht (1), die mit einem aushärtbarem Harz getränkt ist, und mit einer innerhalb der schlauchförmigen Textil- oder Faserschicht (1) angeordneten Innenfolie (2), welche eine Schicht auf der Basis von Polyamid als Barriere aufweist, **dadurch gekennzeichnet, dass** die Innenfolie (2) bei einem zumindest dreischichtigen Aufbau zwischen zwei Außenschichten (6) auf der Basis von Polyamid und zumindest eine Kernschicht (7) aus einem thermoplastischen Elastomer oder einem lonomer aufweist.

2. Rohrinnenbeschichtungsbeschichtungsmaterial nach Anspruch 1, **dadurch gekennzeichnet, dass** die Kernschicht (7) eine geringere Härte als die Außenschichten (6) aufweist.

3. Rohrinnenbeschichtungsmaterial nach Anspruch 1 oder 2, **dadurch gekennzeichnet, dass** die Außenschichten (6) der Innehfälie (2) ein Copolyamid, insbesondere ein Copolyamid PA6/66 enthalten.

4. Rohrinnenbeschichtungsmaterial nach einem der Ansprüche 1 bis 3, **dadurch gekennzeichnet, dass** die Außenschichten (6) eine Dicke zwischen 10 µm und 80 µm aufweisen.

5. Rohrinnenbeschichtungsmaterial nach einem der Ansprüche 1 bis 4, **dadurch gekennzeichnet, dass** die Kernschicht (7) eine Dicke zwischen 20 µm und 80 µm aufweist.

6. Rohrinnenbeschichtungsmaterial nach einem der Ansprüche 1 bis 5, **dadurch gekennzeichnet, dass** die Glastemperatur. T_{g} der Kernschicht (7) unterhalb von -20 °C liegt.

7. Rohrinnenbeschichtungsmaterial nach einem der Ansprüche 1 bis 6, **dadurch gekennzeichnet, dass** die Kernschicht (7) ein thermoplastisches Elastomer aus der Gruppe der elastischen Polyolefine und der elastischen Polyurethane enthält.

8. Rohrinnenbeschichtungsmaterial nach einem der Ansprüche 1 bis 6, **dadurch gekennzeichnet, dass** die Kernschicht (7) ein Zn-Ionomer enthält.

9. Rohrinnenbeschichtungsmaterial nach einem der Ansprüche 1 bis 8, **dadurch gekennzeichnet, dass** die Innenfolie (2) einen symmetrischen Schichtaufbau aufweist.

10. Rohrinnenbeschichtungsmaterial nach einem der Ansprüche 1 bis 9, **dadurch gekennzeichnet, dass** um die schlauchförmige Textil- oder Faserschicht (1) eine Außenfolie (3) angeordnet ist.

11. Rohrinnenbeschichtungsmaterial nach einem der Ansprüche 1 bis 10, **dadurch gekennzeichnet, dass** die Innenfolie (2) eine Coextrusionsfolie ist.

12. Verfahren zur Sanierung defekter Abwasserkanäle, wobei
a) Rohrinnenbeschichtungsmaterial nach einem der Ansprüche 1 bis 11, in einen Kanalrohrabschnitt (5) eingebracht wird,
b) das Rohrinnenbeschichtungsmaterial nachfolgend durch die Beaufschlagung mit einem Fluid in radialer Richtung expandiert und gegen eine Innenwand des Kanalrohrabschnitts (5) gedrückt wird,
c) nach der Expansion das Harz, mit dem die schlauchförmige Textil- oder Faserschicht (1) getränkt ist, ausgehärtet wird und
d) die Innenfolie (2) nach dem Aushärten des Harzes von der Textil- oder Faserschicht (1) entfernt wird.

## Claims

1. A pipe internal coating material, in particular for renovating defective waste water channels, comprising a tubular textile or fibre layer (1) which is impregnated with a curable resin and comprising an inner film (2) arranged inside the tubular textile or fibre layer (1), which has a polyamide-based layer as a barrier, **characterized in that** the inner film (2) has an at least three-layer structure between two outer polyamide-based layers (6) and at least one core layer (7) made of a thermoplastic elastomer or an ionomer.

2. The pipe internal coating material according to claim 1, **characterized in that** the core layer (7) has a lower hardness than the outer layers (6).

3. The pipe internal coating material according to claim 1 or 2, **characterized in that** the outer layers (6) of the inner film (2) contain a copolyamide, in particular a copolyamide PA6/66.

4. The pipe internal coating material according to any one of claims 1 to 3, **characterized in that** the outer layers (6) have a thickness between 10 µm and 80 µm.

5. The pipe internal coating material according to any one of claims 1 to 4, **characterized in that** the core layer (7) has a thickness between 20 µm and 80 µm.

6. The pipe internal coating material according to any one of claims 1 to 5, **characterized in that** the glass temperature Tg of the core layer (7) lies below -20 °C.

7. The pipe internal coating material according to any one of claims 1 to 6, **characterized in that** the core layer (7) is a thermoplastic elastomer from the group of elastic polyolefins and elastic polyurethanes.

8. The pipe internal coating material according to any one of claims 1 to 6, **characterized in that** the core layer (7) contains a Zn-ionomer.

9. The pipe internal coating material according to any one of claims 1 to 8, **characterized in that** the inner film (2) has a symmetrical layer structure.

10. The pipe internal coating material according to any one of claims 1 to 9, **characterized in that** an outer film (3) is arranged around the tubular textile or fibre layer (1).

11. The pipe internal coating material according to any one of claims 1 to 10, **characterized in that** the inner film (2) is a coextrusion film.

12. A method for renovating defective waste water channels, wherein
a) pipe internal coating material according to any one of claims 1 to 11 is introduced into a sewer pipe section (5),
b) the pipe internal coating material is subsequently expanded by being acted upon by a fluid in the radial direction and pressed against an inner wall of the sewer pipe section (5).
c) after expansion the resin with which the tubular textile or fibre layer (1) is impregnated is cured and
d) the inner film (2) is removed from the textile or fibre layer (1) after curing the resin.

## Revendications

1. Matériau de revêtement intérieur de tuyaux, en particulier pour la réfection de canalisations d'égouts défectueuses, comportant une couche textile ou fibreuse de forme tubulaire (1) qui est imprégnée d'une résine durcissable et comportant un film intérieur (2) disposé dans la couche textile ou fibreuse de forme tubulaire (1) et présentant une couche à base de polyamide formant barrière, **caractérisé en ce que** le film intérieur (2) présente, dans le cas d'une structure à au moins trois couches, deux couches extérieures (6) à base de polyamide et au moins une couche centrale (7) en élastomère thermoplastique ou en ionomère.

2. Matériau de revêtement intérieur de tuyaux selon la revendication 1, **caractérisé en ce que** la couche centrale (7) a une dureté inférieure à celle des couches extérieures (6).10

3. Matériau de revêtement intérieur de tuyaux selon la revendication 1 ou 2, **caractérisé en ce que** les couches extérieures (6) du film intérieur (2) contiennent un copolyamide, en particulier un copolyamide PA6/66.

4. Matériau de revêtement intérieur de tuyaux selon une des revendications 1 à 3, **caractérisé en ce que** les couches extérieures (6) ont une épaisseur de 10 µm à 80 µm.

5. Matériau de revêtement intérieur de tuyaux selon une des revendications 1 à 4, **caractérisé en ce que** la couche centrale (7) a une épaisseur de 20 µm à 80 µm.

6. Matériau de revêtement intérieur de tuyaux selon une des revendications 1 à 5, **caractérisé en ce que** la température du verre Tg de la couche centrale (7) est inférieure à - 20 °C.

7. Matériau de revêtement intérieur de tuyaux selon une des revendications 1 à 6, **caractérisé en ce que** la couche centrale (7) contient un élastomère thermoplastique du groupe constitué des polyoléfines élastiques et des polyuréthanes élastiques.

8. Matériau de revêtement intérieur de tuyaux selon une des revendications 1 à 6, **caractérisé en ce que** la couche centrale (7) contient un ionomère de Zn.

9. Matériau de revêtement intérieur de tuyaux selon une des revendications 1 à 8, **caractérisé en ce que** le film intérieur (2) présente une structure feuilletée symétrique.

10. Matériau de revêtement intérieur de tuyaux selon une des revendications 1 à 9, **caractérisé en ce qu'**un film extérieur (3) est disposé autour de la couche textile ou fibreuse de forme tubulaire (1).

11. Matériau de revêtement intérieur de tuyaux selon une des revendications 1 à 10, **caractérisé en ce que** le film intérieur (2) est un film coextrudé.

12. Procédé de réfection de canalisations d'égouts défectueuses, dans lequel
a) du matériau de revêtement intérieur de tuyaux selon une des revendications 1 à 11 est introduit dans une section de canalisation tubulaire (5),
b) le matériau de revêtement intérieur de tuyaux est ensuite dilaté dans le sens radial par sollicitation avec un fluide et comprimé contre une paroi intérieure de la section de canalisation tubulaire (5),
c) après l'expansion, la résine dont la couche textile ou fibreuse de forme tubulaire (1) est imprégnée est durcie et
d) le film intérieur (2) est enlevé après le durcissement de la résine de la couche textile ou fibreuse de forme tubulaire (1).
